# DEMANDE DE BREVET EUROPEEN

(11) **EP 0 541 506 A2**
(43) Date de publication de la demande: **12.05.1993**
(21) Numéro de dépôt: 92870186.1
(22) Date de dépôt: 06.11.1992
(51) Int. Cl.: A62C 2/06, A62C 3/00

(54) **Elément et caisson de protection contre le feu**

(30) Priorité: 06.11.1991 BE 9101023
(71) Demandeur: IES. A.P. LES ERABLES B.W., B-7540 Kain (BE)
(72) Inventeur: Seghers, Roger, B-7540 Kain (BE)
(74) Mandataire: Vanderperre, Robert

(57) **Abrégé**

L'élément de protection s'étend entre une face (11) destinée a former une face interne d'un caisson et une face (12) destinée a former une face externe du caisson. L'élément présente entre les dites faces une face latérale (13a,13b) dont la forme présente au moins deux parties (18,20) s'étendant dans des directions différentes.

## Description

La présente invention a pour objet un élément de protection contre le feu d'hydrocarbure, en particulier pour réaliser des caissons de protection démontables contre des feux d'hydrocarbure avec porte(s) et évent(s) pendant une durée minimale, par exemple comprise entre 60 et 120 minutes.

Jusqu'à présent, des caissons de protection contre le feu par exemple pour protéger des vannes, des conduits, etc d'industries diverses, en particulier chimiques et pétrochimiques sont réalisés suivant une autre conception.

Il est proposé de réaliser des caissons de protection au moyen de parois en couche anti-feu. Pour permettre la fixation des parois entre elles, lesdites parois sont solidaires d'un support, constituant une ossature. Ces supports définissent les faces internes de la chambre du caisson.

Toutefois, lors d'un incendie, des parois juxtaposées d'un caisson subiront une dilatation importante. Ceci provoque un léger écartement des bords des parois. Un tel écartement favorise la formation de chenaux entre les bords de parois adjacentes et donc la transmission de chaleur vers l'espace interne du caisson et la dégradation de la vanne à protéger.

La présente invention vise également à remédier à ce problème et a pour objet des éléments de protection contre le feu permettant de réaliser des caissons anti-feu pour lesquels les problèmes d'étanchéité des parois entre elles sont résolus, c'est-à-dire pour lesquels le risque de formation de chenaux est supprimé.

L'élément pour réaliser un caisson ou une partie d'un caisson de protection contre le feu s'étend entre une première face destinée à former une face interne du caisson et une deuxième face opposée à ladite première face et destinée à former une face externe du caisson et présente une face latérale s'étendant entre lesdites première et deuxième faces, cette face latérale présentant*, entre un bord de la première face et un bord de la deuxième face, une forme ayant au moins deux parties s'étendant dans des directions différentes. Ainsi, par exemple, lorsque la face latérale* a une forme courbe, le plan tangent à une partie de la face latérale* est incliné par rapport au plan tangent à une autre partie de ladite face latérale*. ( *: en section transversale)

De préférence, chacun des éléments (parois latérales, support, couvercle) pour réaliser un caisson s'étend entre une première face destinée à former une face interne du caisson et une deuxième face opposée à ladite première face et destinée à former une face externe du caisson et présente une face latérale s'étendant entre lesdites première et deuxième faces, cette face latérale présentant, entre un bord de la première face et un bord de la deuxième face, une forme ayant au moins deux parties s'étendant dans des directions différentes.

Dans une forme de réalisation, la face latérale présente entre un bord de la première face et un bord de la deuxième face, au moins deux parties planes s'étendant dans des directions orthogonales.

Selon une caractéristique de cette forme de réalisation, la face latérale s'étendant entre un bord de la première face et un bord de la deuxième face présente une forme en escalier comprenant deux parties planes parallèles entre elles et reliées entre elles par une partie plane s'étendant dans un plan orthogonal auxdites deux parties parallèles.

Selon une autre caractéristique de cette forme de réalisation, la partie plane s'étendant entre lesdites parties parallèles a une longueur sensiblement égale à la hauteur d'une ou desdites parties parallèles.

Selon une particularité d'un élément suivant l'invention, l'élément comprend un support, et soit une couche anti-feu (par libération d'eau, par exemple de liaison ou par un autre principe) ou soit une couche anti-feu et une couche isolante.

Selon une autre particularité d'un élément suivant l'invention, lesdites première et deuxième faces ont une forme sensiblement carrée ou rectangulaire et l'élément présente quatre faces latérales s'étendant chacune entre un bord de la première face et un bord de la deuxième face qui est parallèle au bord de la première face.

La présente invention a encore pour objet un caisson de protection réalisé au moyen d'éléments suivant l'invention ou comprenant au moins un élément suivant l'invention, par exemple pour former une porte du caisson. Un tel caisson est utile pour protéger des pièces ou parties de canalisations d'installations chimiques, pétrochimiques ou pétrolières.

Selon une forme de réalisation d'un caisson suivant l'invention réalisé au moyen d'éléments dont la face latérale s'étendant entre un bord de la première face et un bord de la deuxième face présente une forme en escalier comprenant deux parties planes parallèles entre elles et reliées entre elles par une partie plane s'étendant dans un plan orthogonal auxdites deux parties parallèles, et dont lesdites première et deuxième faces ont une forme sensiblement carrée ou rectangulaire de sorte que l'élément présente quatre faces latérales s'étendant chacune entre un bord de la première face et un bord de la deuxième face qui est parallèle audit bord de la première face, une desdites parties parallèles et la partie s'étendant entre celles-ci d'une face latérale d'un élément prennent appui respectivement sur une des parties parallèles et sur la partie s'étendant entre celles-ci d'une face latérale d'un élément adjacent ou sur la partie s'étendant entre des parties parallèles et sur une des parties parallèles d'une face latérale d'un élément adjacent.

Selon une particularité d'un caisson suivant l'invention, il présente une ouverture s'étendant dans un élément du caisson, ladite ouverture étant définie par une face ou des faces s'étendant entre une première face de l'élément destinée à former une face interne du caisson et une deuxième face de l'élément destinée à former une face externe du caisson. Entre un bord de l'ouverture à la première face et un bord de l'ouverture à la deuxième face de l'élément, la ou les faces de l'ouverture s'étendant entre lesdites première et deuxième faces présentent une forme ayant au moins deux parties qui s'étendent dans des directions différentes, de préférence orthogonales. La surface de passage de l'ouverture à la deuxième face de la paroi est supérieure à celle de l'ouverture du côté de la première face.

De façon avantageuse, la ou les faces qui définissent l'ouverture présentent entre lesdites première et deuxième faces deux parties de préférence planes, s'étendant dans des directions orthogonales, de préférence des plans orthogonaux.

De préférence, la face s'étendant entre un bord de l'ouverture à la deuxième face de l'élément et un bord de l'ouverture à la première face de l'élément présente une forme en escalier comprenant deux parties planes parallèles entre elles et reliées entre elles par une partie plane s'étendant dans un plan orthogonal auxdites deux parties parallèles.

La porte destinée à fermer l'ouverture du caisson est avantageusement un élément suivant l'invention dont la face ou les faces latérales épousent la forme de la ou des faces définissant l'ouverture.

Les caissons de protection contre le feu sont avantageusement munis d'un drain et d'un évent. Un tel évent qui convient en particulier pour les caissons de protection selon l'invention est par exemple constitué d'un conduit muni d'une série de plaquettes contenant une matière intumescente, chaque plaquette obturant partiellement la surface de passage du conduit , lesdites plaquettes étant placées les unes au-dessus des autres de manière à former un passage dans le conduit entre les plaquettes extrêmes. Lorsque ledit conduit présente une section transversale circulaire, les plaquettes ont une forme circulaire dont au moins une partie, segment ou secteur a été enlevé de manière à former un canal entre les faces opposées de la plaquette, les plaquettes étant placées les unes au-dessus des autres de manière à ce que le canal d'une plaquette communique avec le canal des plaquettes adjacentes.

De façon avantageuse, les éléments d'un caisson suivant l'invention sont reliés entre eux par des moyens permettant le démontage partiel, de préférence total, du caisson.

D'autres particularités et détails de l'invention ressortiront de la description détaillée suivante dans laquelle il est fait référence aux dessins ci-annexés qui montre une forme de réalisation d'un caisson suivant l'invention.

Dans ces figures :
- la figure 1 est une vue en perspective d'un caisson suivant l'invention ;
- la figure 2 est une vue en coupe selon le plan II-II du caisson représenté à la figure 1 mais avec la porte ouverte ;

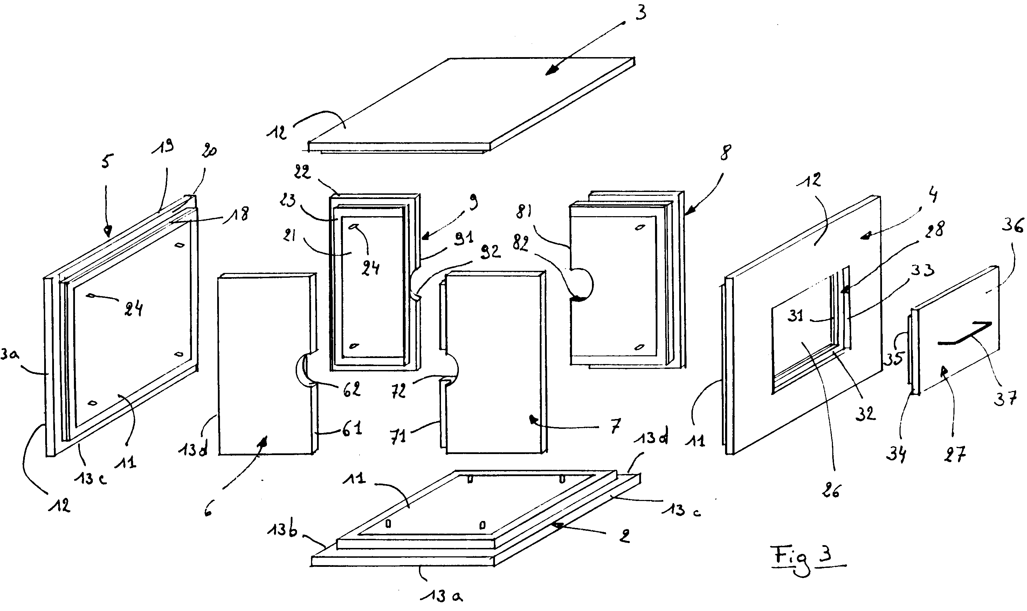

- la figure 3 est une vue éclatée du caisson représenté à la figure 1,
- la figure 4 est une vue d'un détail du caisson représenté à la figure 1 ;
- la figure 5 est une vue d'un détail d'un caisson, et
- la figure 6 est une vue en coupe selon la ligne VI-VI.

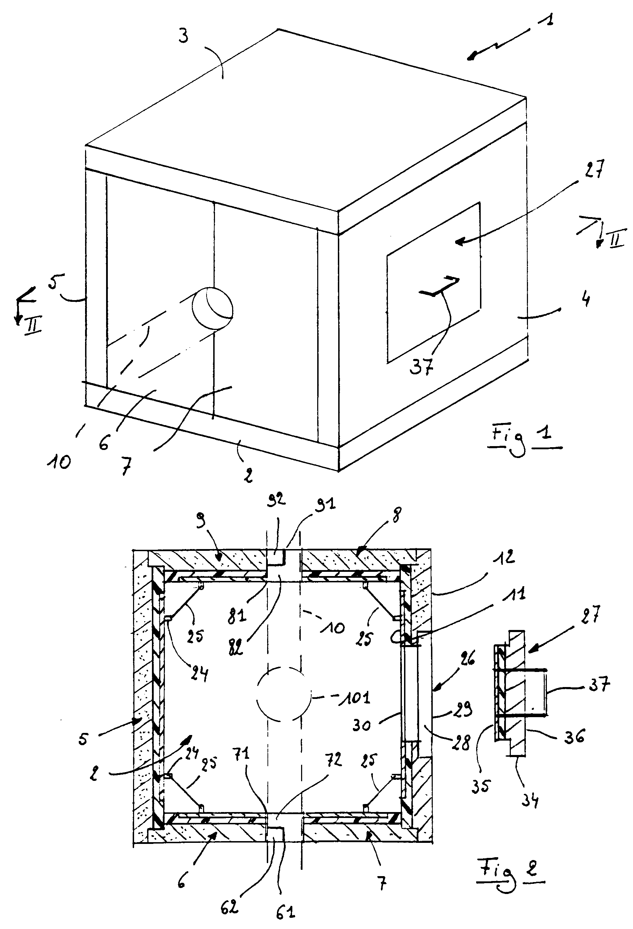

La figure 1 représente un caisson suivant l'invention destiné à protéger une vanne contre le feu. Ce caisson comprend une série d'éléments placés les uns par rapport aux autres, de manière qu'une paroi latérale d'un élément touche une surface d'un élément adjacent. Le caisson 1 comporte un élément inférieur 2 reposant sur un pied non représenté, un élément 3 et des éléments latéraux 4,5,6,7,8 et 9. Les éléments latéraux 6,7,8,9 sont reliés deux à deux pour former deux cloisons opposées l'une à l'autre. Ces éléments présentent au voisinage d'un de leurs bords 61,71,81,91 une partie en retrait 62,72,82,92. Les parties en retrait 62,72; 82,92 de deux éléments adjacents 6,7 ; 8,9 forment un passage dans lesdites cloisons pour le conduit 10 sur lequel est montée la vanne 101 à protéger.

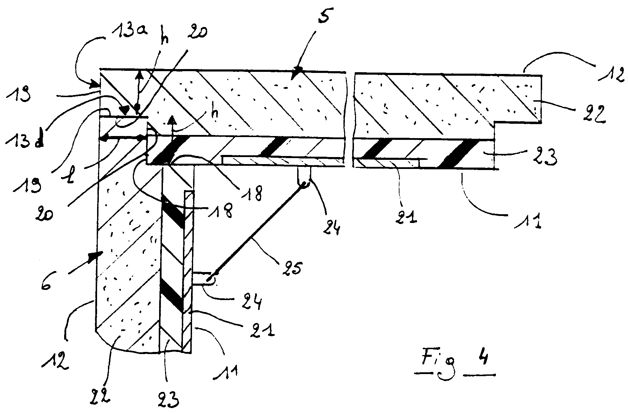

Les éléments s'étendent entre une première face 11 destinée à former une face interne du caisson et une deuxième face 12 destinée à former une face externe du caisson (voir figure 4). Ces éléments présentent des faces latérales 13a, 13b, 13c, 13d qui s'étendent entre lesdites première et deuxième faces 11,12. Ces faces latérales présentent entre un bord 14 de la première face 11 et un bord 15 de la deuxième face 12, une forme ayant au moins deux parties 18,20 s'étendant dans des directions différentes.

En fait, dans la forme de réalisation représentée, les faces latérales 13a, 13b, 13c, 13d s'étendent entre les faces planes 11,12 qui sont parallèles entre elles et présentent trois parties planes, à savoir une première partie 18 adjacente de la face interne 11, une deuxième partie 19 adjacente de la face externe 12 et une troisième partie 20 s'étendant entre lesdites première et deuxième parties dans un plan orthogonal à ces dites première et deuxième parties. Dans cette forme de réalisation, les première et deuxième parties 18, 19 s'étendent dans un plan orthogonal aux plans dans lesquels s'étendent les faces interne et externe 11,12 et donc les bords de celles-ci.

Les faces latérales ont donc une forme en escalier. La hauteur h des marches, c'est-à-dire des parties 18, 19 est avantageusement sensiblement égale à la largeur 1 de la partie 20 qui s'étend entre les parties 18,19. Ceci permet un emboîtement correct d'une face latérale d'un élément avec une face latérale d'un élément adjacent.

Les différents éléments comprennent un support 21, une couche anti-feu 22 telle qu'à titre d'exemple une couche en béton ou en résine époxy et une couche isolante 23, telle qu'à titre d'exemple une couche de résine, polyuréthane, couche à base de laine de roche, etc.

Les supports des éléments présentent des taquets 24, une tige 25 s'étendant entre deux taquets de deux supports d'éléments d'adjacents de manière à les solidariser.

Le support 21 est muni sur la face opposée à celle portant les taquets 24 d'une couche isolante 23, couche qui s'étend au-delà du support 21 de manière à ce qu'une partie de la couche 23 surplombe le support 21, par exemple sur une distance supérieure à h sur tout le pourtour du support. Ceci permet d'éviter éventuellement que le support d'un élément ne touche la couche anti-feu par exemple en béton 22 d'un élément adjacent. Cette couche isolante recouvre la face de la couche 22 résistant au feu qui est tournée vers le support 21.

La couche 22 est par exemple réalisée en un béton poreux contenant un liant et une charge capable de libérer de l'eau de liaison, telle que Al(OH)₃, ou est une couche de résine par exemple époxy chargée de matières diverses.

A titre d'exemple, le béton contient de 10 à 60% de charge à base d'Al(OH)₃ et de matières fibreuses et de 10 à 30% en volume de liant polymère, le restant étant constitué de ciment, sable, etc.

Deux éléments adjacents présentent des faces latérales qui s'emboîtent.

Ainsi, par exemple la face latérale 13a de l'élément 5 touche la face latérale 13d de l'élément 6 de manière à ce que la partie 20 et la partie 19 de la face latérale 13a de l'élément 5 prennent appui sur la partie 18 et la partie 20 de la face latérale 13d de l'élément 6 (voir figure 4).

Les éléments 5,6,7,4,8,9 forment ainsi un conduit présentant sur sa partie inférieure et sur sa partie supérieure une partie en retrait destinée à servir d'appui à des parties de la face latérale des éléments 2 et 3. Bien que l'élément supérieur 3 puisse simplement être posé sur le cadre ou partie en retrait formé par les éléments 4,5,6,7,8 et 9 de manière à pouvoir servir de porte au caisson pour l'entretien de la vanne, un (4) des éléments est avantageusement muni d'une ouverture 26 qui peut être fermée par une porte 27.

Ladite ouverture 26 est percée dans l'élément 4 et s'étend donc entre la face interne 11 et la face externe 12 de l'élément 4. Cette ouverture est définie par quatre faces latérales 28. Ces faces 28 qui s'étendent entre un bord 29 de l'ouverture 26 à la deuxième face 12 (externe) et un bord 30 de l'ouverture 26 à la première face 11 (interne) présentent une forme ayant au moins deux parties 31, 32 s'étendant dans des directions orthogonales (plans orthogonaux).

La surface de passage de l'ouverture 26 à la face externe 12 est supérieure à celle de l'ouverture 26 à la face interne.

Dans la forme de réalisation, les faces 28 comprennent trois parties, à savoir une partie 31 adjacente à la face interne 11 et s'étendant dans un plan perpendiculaire à cette face 11, une partie 33 adjacente à la face externe 12 et s'étendant dans un plan perpendiculaire à cette face 12, et une partie 32 s'étendant entre lesdites parties 31,33 et dans un plan parallèle à la face interne 11 ou externe 12.

La porte 27 est un élément suivant l'invention dont les faces latérales 34 qui s'étendent entre la face 35 destinée à être tournée vers l'extérieur du caisson et la face 36 destinée à être tournée vers l'intérieur du caisson présentent une forme destinée à épouser les formes des faces 28 définissant l'ouverture 26. Cette porte est avantageusement munie d'une poignée 27. Cette poignée est par exemple obtenue en soudant les extrémités libres d'une pièce en forme de U sur le support 21 de la porte.

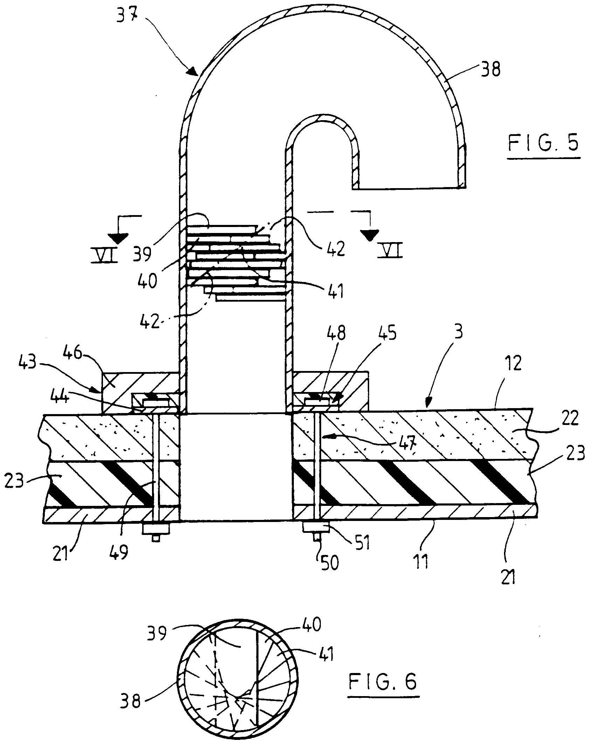

Le caisson ou boîtier est avantageusement muni d'un drain et d'un évent. Un évent pour caisson anti-feu est représenté à plus grande échelle à la figure 5. Cet évent 37 comprend un conduit 38 dont l'extrémité est coudée. Ce conduit est muni d'une série de plaquettes 39,40,41 contenant une matière intumescente.

Le conduit 38 présente en coupe transversale une section de passage circulaire. Les plaquettes 39,40,41 ont une forme circulaire correspondant à la section de passage du conduit 38 mais dont un segment ou partie 41 a été retiré. Chaque plaquette 39,40,41 obture donc partiellement la section de passage du conduit 38.

Les plaquettes 39,40,41 sont placées les unes au-dessus des autres de manière à ce que le canal formé par une plaquette et la paroi interne du conduit 38 communique avec le canal de plaquettes adjacentes. Par ces plaquettes, un chenal 42 sensiblement hélicoïdal est formé entre les plaquettes extrêmes.

Dans la forme de réalisation représentée, le conduit 38 est solidaire d'un bloc support 43 constitué d'une plaquette 44 sur laquelle est fixé le conduit 38 par exemple par soudage, d'une couche isolante 45 recouvrant la plaque 44, et d'une couche anti-feu 46 recouvrant la face de la couche isolante 45 opposée à celle adjacente à la plaque 44 ainsi que les faces latérales de la couche isolante 45 et de la plaque 44.

La fixation du bloc support 43 sur l'élément 3 est obtenue grâce à des boulons 47 dont la tête 48 prend appui sur la plaque 44 et dont la tige 49 est engagée dans un trou que présente la plaque 44 et dans un canal qui s'étend entre la face extérieure 12 et la face intérieure 11 de l'élément 3. L'extrémité 50 de la tige 49 est filetée et s'étend hors du canal formé dans l'élément 3, de sorte qu'au moyen d'un écrou 51 vissé sur ladite extrémité, il est possible de serrer le bloc support 43 contre l'élément 3.

## Revendications

1. Elément pour caisson de protection contre le feu d'hydrocarbure, comportant un support (21) et une couche anti-feu (22), cet élément s'étendant entre une première face (11) destinée à former une face interne du caisson et une deuxième face (12) opposée à ladite première face et destinée à former une face externe du caisson, cet élément présentant une face latérale (13a, 13b, 13c, 13d) s'étendant entre lesdites première (11) et deuxième face (12), cette face latérale présentant, entre un bord (14) de la première face (11) et un bord (15) de la deuxième face (12), une forme ayant au moins deux parties s'étendant dans des directions différentes.

2. Elément suivant la revendication 1, caractérisé en ce que la face latérale (13a, 13b, 13c, 13d) présente entre un bord (14) de la première face (11) et un bord (15) de la deuxième face (12), au moins deux parties planes (18,20) s'étendant dans des directions orthogonales.

3. Elément suivant la revendication 2, caractérisé en ce que la face latérale (13a, 13b, 13c, 13d) s'étendant entre un bord (14) de la première face (11) et un bord (15) de la deuxième face (12) présente une forme en escalier comprenant deux parties planes (18, 19) parallèles entre elles et reliées entre elles par une partie plane (20) s'étendant dans un plan orthogonal auxdites deux parties parallèles (18, 19).

4. Elément suivant la revendication 3, caractérisé en ce que la partie plane (20) s'étendant entre lesdites parties (18, 19) parallèles à une longueur (1) égale à la hauteur (h) d'une ou desdites parties parallèles (18, 19).

5. Elément suivant l'une des revendications 1 à 4, caractérisé en ce qu'il comprend un support (21), une couche anti-feu (22), et entre ledit support (21) et ladite couche anti-feu (22) une couche isolante de la chaleur (23).

6. Elément suivant l'une des revendications 1 à 5, caractérisé en ce que lesdites première et deuxième faces (11,12) ont une forme sensiblement carrée ou rectangulaire et en ce que l'élément présente quatre faces latérales (13a, 13b, 13c, 13d) s'étendant chacune entre un bord (14) de la première face (11) et un bord (15) de la deuxième face (12) qui est parallèle au bord (14) de la première face.

7. Caisson de protection anti-feu pour des pièces de canalisations (10) d'installations chimiques, pétrochimiques ou pétrolières, ce caisson comprenant au moins un élément suivant l'une des revendications 1 à 6.

8. Caisson suivant la revendication 7, réalisé au moyen d'éléments suivant les revendications 3 et 6, caractérisé en ce qu'une desdites parties parallèles (18, 19) et la partie (20) s'étendant entre celles-ci d'une face latérale (13a, 13b, 13c, 13d) d'un élément prennent appui respectivement sur une des parties parallèles (18, 19) et sur la partie (20) s'étendant entre celles-ci d'une face latérale (13a, 13b, 13c, 13d) d'un élément adjacent ou sur la partie (20) s'étendant entre des parties parallèles (18,19) et sur une des parties parallèles d'un élément adjacent.

9. Caisson suivant la revendication 7 ou 8, caractérisé en ce qu'il présente une ouverture (26) s'étendant dans une paroi du caisson (4), ladite ouverture étant définie par une face ou des faces (28) s'étendant entre une première face (11) de la paroi destinée à former une face interne du caisson et une deuxième face (12) de la paroi destinée à former une face externe du caisson, en ce que la face (28) s'étendant entre un bord de l'ouverture (26) à la première face (11) et un bord de l'ouverture (26) à la deuxième face (12) présente une forme ayant au moins deux parties qui s'étendent dans des directions différentes, de préférence orthogonales, et en ce que la surface de passage de l'ouverture (26) à la deuxième face (12) de la paroi est supérieure à celle de l'ouverture (26) du côté de la première face (11).

10. Caisson suivant la revendication 9, caractérisé en ce que la ou les faces (28) qui définissent l'ouverture (26) présentent entre lesdites première et deuxième faces (11, 12) au moins deux parties (31, 32) de préférence planes, s'étendant dans des directions orthogonales, de préférence des plans orthogonaux.

11. Caisson suivant la revendication 10, caractérisé en ce que la face (28) s'étendant entre un bord de l'ouverture (26) à la deuxième face (12) de la paroi et un bord de l'ouverture (26) à la première face (11) de la paroi présente une forme en escalier comprenant deux parties (31, 33) planes parallèles entre elles et reliées entre elles par une partie plane (32) s'étendant dans un plan orthogonal auxdites deux parties parallèles.

12. Caisson suivant l'une des revendications 9 à 11, caractérisé en ce qu'il comprend un élément selon l'une des revendications 1 à 6 dont la ou les faces latérales épousent la forme de la ou des faces définissant l'ouverture.

13. Caisson suivant l'une des revendications 8 à 12, caractérisé en ce que les éléments sont reliés entre eux par des moyens (24,25) permettant le démontage du caisson ou d'une partie de celui-ci.

14. Caisson suivant l'une des revendications 7 à 19, caractérisé en ce qu'il comprend un drain et/ou un évent.
